# DEMANDE DE BREVET EUROPEEN

(11) **EP 3 926 414 A1**
(43) Date de publication de la demande: **22.12.2021**
(21) Numéro de dépôt: 20180587.6
(22) Date de dépôt: 17.06.2020
(51) Int. Cl.: G04C 3/00, G04G 9/10, G04G 21/02

(54) **DISPOSITIF D'AFFICHAGE ET PROCÉDÉ AFFÉRENT**

(71) Demandeur: ETA SA Manufacture Horlogère Suisse, 2540 Grenchen (CH)
(72) Inventeur: BESUCHET, Romain, 1400 Yverdon-les-Bains (CH); NOIRJEAN, José, 2362 Montfaucon (CH)
(74) Mandataire: ICB SA

(57) **Abrégé**

La présente invention concerne un procédé de permutation d'affichage (500) mise en œuvre par un dispositif d'affichage (100) permettant de détecter le passage entre une première orientation (131) dudit dispositif d'affichage (100) et une deuxième orientation (132) dudit dispositif d'affichage (100) de sorte à permuter au moins un premier indicateur (110) entre au moins un premier mode de fonctionnement (101) et au moins un deuxième mode de fonctionnement (102), et au moins un affichage numérique (140) entre au moins un premier mode d'affichage (141) et au moins un deuxième mode d'affichage (142).

## Description

### Domaine technique

La présente invention concerne les montres connectées, et notamment les kits de chargement pour montres connectées.

### Arrière-plan technologique

Bien souvent lorsque les montres, en particulier les montres connectées son rechargées l'écran s'éteint ou indique le taux de charge de la batterie. Afin de connaitre l'heure, il convient d'effectuer une petite manipulation afin que la montre puisse afficher l'heure.

### Résumé de l'invention

La présente invention se propose de résoudre tout ou partie de ces inconvénients grâce à un dispositif d'affichage comprenant au moins un premier mode de fonctionnement, au moins un deuxième mode de fonctionnement, et au moins :
- Un premier indicateur ; ledit au moins un premier indicateur étant configurés pour indiquer l'heure dans au moins une première position primaire selon ledit au moins un premier mode de fonctionnement et dans au moins une deuxième position primaire selon ledit au moins un deuxième mode de fonctionnement ;
- Un organe de détection ; ledit au moins un organe de détection étant configuré pour détecter le passage entre une première orientation dudit dispositif d'affichage et une deuxième orientation dudit dispositif d'affichage ; et
- Une unité de permutation ; ladite au moins une unité permutation étant configurée pour permuter ledit au moins un premier indicateur entre ledit au moins un premier mode de fonctionnement et ledit au moins un deuxième mode de fonctionnement, lorsque ledit au moins un organe de détection détecte le passage entre ladite première orientation et ladite deuxième orientation.

Grâce à cette disposition, lorsque ledit dispositif d'affichage change d'orientation, en particulier lorsque ledit dispositif d'affichage est placé sur une station de chargement, l'utilisateur peut lire l'heure pendant le chargement.

Selon un mode de réalisation, ledit dispositif d'affichage comprend au moins un affichage numérique comprenant au moins un premier mode d'affichage dans ladite première orientation et au moins un deuxième mode d'affichage dans ladite deuxième orientation et dans lequel ladite au moins une unité permutation étant configurée pour permuter ledit au moins un affichage numérique entre ledit au moins un premier mode d'affichage et ledit au moins un deuxième mode d'affichage, lorsque ledit au moins un organe de détection détecte le passage entre ladite première orientation et ladite deuxième orientation.

Grâce à cette disposition, lorsque ledit dispositif d'affichage change d'orientation, en particulier lorsque ledit dispositif d'affichage est placé sur une station de chargement, ledit au moins un affichage numérique permet de permuter entre différents affichage de sorte que l'utilisateur puisse connaître l'orientation de ladite montre et donc lire l'heure aisément pendant le chargement.

Selon un mode de réalisation, ledit au moins un affichage numérique est configuré pour afficher un ensemble d'index dans ledit au moins un deuxième mode d'affichage dans ladite deuxième orientation.

Grâce à cette disposition, lorsque ledit dispositif d'affichage change d'orientation, en particulier lorsque ledit dispositif d'affichage est placé sur une station de chargement, l'utilisateur peut connaître l'orientation de ladite montre et donc lire l'heure aisément pendant le chargement.

Selon un mode de réalisation, ledit au moins un organe de détection est un accéléromètre, capteur capacitif, capteur inductif, capteur résistif, capteur optique et/ou un détecteur d'alimentation.

Grâce à cette disposition, ledit dispositif d'affichage peut détecter un changement d'orientation et/ou lorsqu'il est connecté à une station de chargement.

Selon un mode de réalisation, ledit au moins un affichage numérique est un écran LCD, OLED, LED et/ou TFT.

Grâce à cette disposition, ledit dispositif d'affichage peut changer d'affichage aisément.

Selon un mode de réalisation, ledit dispositif d'affichage comprend au moins un deuxième indicateur configuré pour indiquer les minutes dans au moins une première position secondaire selon ledit au moins un premier mode de fonctionnement et dans au moins une deuxième position secondaire selon ledit au moins un deuxième mode de fonctionnement.

Grâce à cette disposition, l'utilisateur peut lire l'heure aisément.

Selon un mode de réalisation, ledit dispositif d'affichage comprend au moins un organe d'entrainement configuré pour déplacer ledit au moins un premier indicateur et/ou ledit au moins un deuxième indicateur.

Grâce à cette disposition, lesdits au moins un premier indicateur et/ou au moins un deuxième indicateur peuvent être déplacés entre ledit au moins un premier mode de fonctionnement et ledit au moins un deuxième mode de fonctionnement.

Selon un mode de réalisation, ladite au moins une unité permutation est configurée pour calculer l'angle entre ladite première orientation et ladite deuxième orientation et pour déplacer ledit au moins un premier indicateur entre ladite au moins une première position primaire et ladite au moins une deuxième position primaire en fonction dudit angle et/ou pour déplacer ledit au moins un deuxième indicateur entre ladite au moins une première position secondaire et ladite au moins une deuxième position secondaire en fonction dudit angle.

Grâce à cette disposition, ledit au moins un premier indicateur et/ou ledit au moins un deuxième indicateur peuvent indiquer l'heure et/ou les minutes respectivement dans ladite première orientation et ladite deuxième orientation.

La présente invention concerne une montre de préférence connectée configurée pour fonctionner selon au moins un premier mode de fonctionnement et au moins un deuxième mode de fonctionnement et comprenant au moins un dispositif d'affichage selon un mode de réalisation de la présente invention.

Grâce à cette disposition, lorsque ladite montre change d'orientation, en particulier lorsque ladite montre est placée sur une station de chargement, l'utilisateur peut lire l'heure pendant le chargement.

La présente invention concerne un kit de chargement comprenant au moins une montre selon l'invention et au moins une station de chargement configuré pour charger ou recharger ladite au moins une montre.

Grâce à cette disposition, lorsque ladite montre change d'orientation, en particulier lorsque ladite montre est placée sur une station de chargement, l'utilisateur peut lire l'heure pendant le chargement.

La présente invention concerne un procédé de permutation d'affichage mise en œuvre par ledit dispositif d'affichage selon l'invention, par ladite montre selon l'invention et/ou par le kit de chargement selon l'invention ; ledit procédé de permutation d'affichage comprenant :
- Une détection du passage entre ladite première orientation dudit dispositif d'affichage et ladite deuxième orientation dudit dispositif d'affichage ;
- Une permutation dudit au moins un premier indicateur entre ledit au moins un premier mode de fonctionnement et ledit au moins un deuxième mode de fonctionnement.

Grâce à cette disposition, lorsque ledit dispositif d'affichage ou ladite montre change d'orientation, en particulier lorsque ledit dispositif d'affichage ou ladite montre est placé(e) sur une station de chargement, l'utilisateur peut lire l'heure pendant le chargement.

Selon un mode de réalisation, ladite permutation permute ledit au moins un affichage numérique entre ledit au moins un premier mode d'affichage et ledit au moins un deuxième mode d'affichage

Selon un mode de réalisation, ledit procédé de permutation d'affichage comprend une indication de l'heure dans ledit au moins un premier mode de fonctionnement et dans ledit au moins un deuxième mode de fonctionnement.
grâce à l'une ou l'autre de ces dispositions précédentes, l'utilisateur peut lire l'heure aisément.

### Brève description des figures

L'invention sera décrite ci-après de manière plus détaillée à l'aide des dessins annexés, donnés à titre d'exemples nullement limitatifs, dans lesquels :

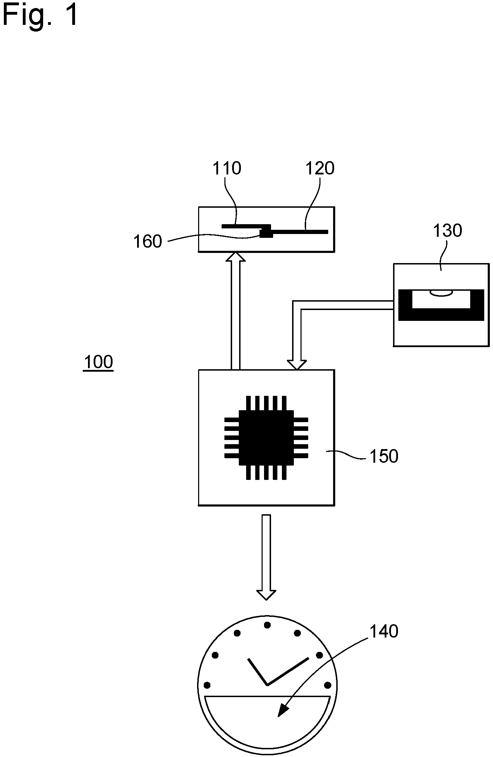

- La figure 1 illustre un dispositif d'affichage **100** selon un mode de réalisation de l'invention ; et

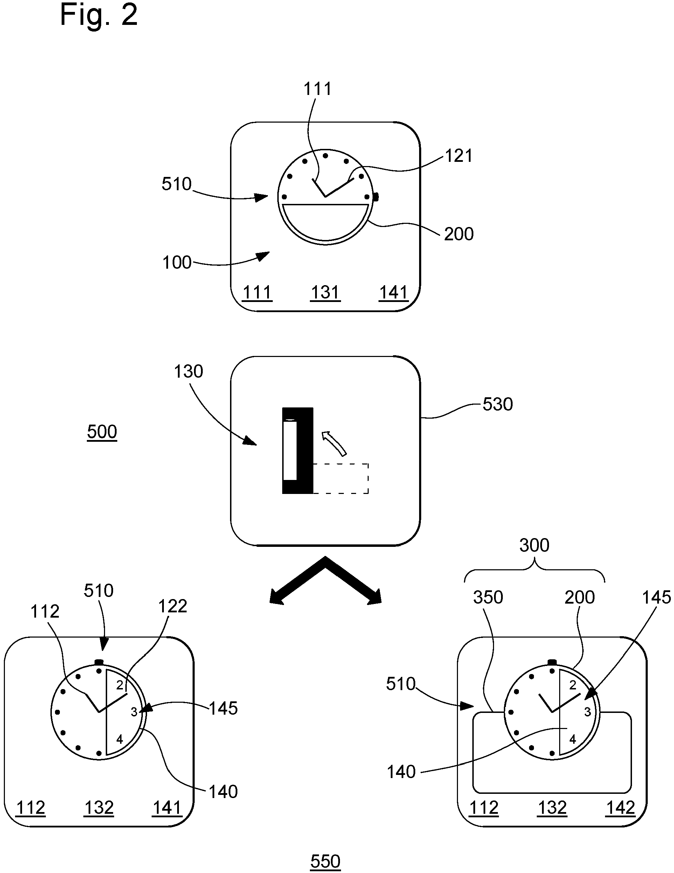

- La figure 2 présente un procédé de permutation d'affichage **500** selon un mode de réalisation de l'invention.

### Description détaillée de l'invention

Lorsqu'une montre, de préférence connectée, est rechargée, il n'est pas évident pour l'utilisateur de lire l'heure si l'orientation de la montre est de 90° ou 270° par exemple. En effet, il est « 10h10 », après orientation de la montre, l'utilisateur lira « 07h55 » ou « 01h25 ». Ce cas survient également lorsque l'utilisateur pose sa montre sur un support telle une table ou un bureau.

Grâce à la présente invention, ce problème est résolu via kit de chargement **300** comprenant au moins une montre **200** et au moins une station de chargement **350** configuré pour charger ou recharger ladite au moins une montre **200.** Ladite montre **200,** de préférence connectée, comprend un dispositif d'affichage **100** qui peut adapter l'heure indiquée en fonction de l'orientation de ladite montre **200** grâce à au moins un premier mode de fonctionnement **101** et à au moins un deuxième mode de fonctionnement **102.** En effet, selon une première orientation **131,** ladite montre **200** peut fonctionner selon ledit au moins un premier mode de fonctionnement **101** et dans une deuxième orientation **132,** ladite montre **200** peut fonctionner selon ledit au moins un deuxième mode de fonctionnement **102.**

Pour ce faire, ledit dispositif d'affichage **100** comprend au moins un premier indicateur **110,** au moins un deuxième indicateur **120,** au moins un organe d'entrainement **160** configuré pour déplacer ledit au moins un premier indicateur **110** et/ou ledit au moins un deuxième indicateur **120,** au moins un organe de détection **130,** au moins un affichage numérique **140,** typiquement un écran LCD, OLED, LED et/ou TFT, et au moins une unité permutation **150.**

En reprenant l'exemple précédent, dans ledit au moins un premier mode de fonctionnement **101,** s'il est «10h10» dans ladite première orientation **131** dudit dispositif d'affichage **100,** ledit au moins un premier indicateur **110** indique l'heure dans au moins une première position primaire **111** et ledit au moins un deuxième indicateur **120** indique les minutes dans au moins une première position secondaire **121** dans ledit au moins un premier mode de fonctionnement **101.**

Bien entendu, il peut également n'y avoir que ledit au moins un premier indicateur **110** indiquant l'heure et partiellement les minutes, comme dans le modèle « Grande Heure » de chez Jaquet Droz. Ledit au moins un affichage numérique **140,** qui peut être compris par ledit dispositif d'affichage **100** selon un mode de réalisation, quant à lui peut afficher différente informations dans au moins un premier mode d'affichage **141** dans ladite première orientation **131,** comme la température et la date par exemple.

Lorsque l'utilisateur souhaite charger ou recharger ladite montre **200,** cette dernière, c'est-à-dire ladite montre **200** est placée sur ladite au moins une station de chargement **350.** Une couronne sur la périphérie de ladite montre **200** et le bracelet peuvent imposer une certaine orientation à ladite montre **200.** Cela peut être également le cas, lorsque l'utilisateur dépose ladite montre **200** sur un chevet ou une table et au lieu de la déposer à plat, il peut orienter ladite montre **200** vers lui en laissant reposer ladite montre **200** sur la périphérie de la carrure de la montre, de sorte que ladite montre **200** puisse afficher l'heure à la manière d'un réveil ou d'une horloge.

Toutefois, comme mentionné précédemment, il sera difficile à l'utilisateur de savoir s'il est « 07h55 » ou « 01h25 », selon son orientation.

Dans cette orientation, c'est-à-dire dans ladite deuxième orientation **132,** ladite montre **200,** mettant en œuvre un procédé de permutation d'affichage **500,** détecte **530** le passage entre ladite première orientation **131** dudit dispositif d'affichage **100** et ladite deuxième orientation **132** dudit dispositif d'affichage **100** via ledit au moins un organe de détection **130** configuré pour détecter **530** ledit passage entre ladite première orientation **131** dudit dispositif d'affichage **100** et ladite deuxième orientation **132** dudit dispositif d'affichage **100.**

Cette détection **530,** comme mentionné ci-avant, est permise par ledit au moins un organe de détection **130** qui peut être un accéléromètre **130,** capteur capacitif **130,** capteur inductif **130,** capteur résistif **130,** capteur optique **130** et/ou un détecteur d'alimentation **130.**

Lorsque ledit au moins un organe de détection **130** est un accéléromètre **130,** c'est la gravité terrestre qui indique ladite première orientation **131** et ladite deuxième orientation **132.** Dans le cas d'un capteur capacitif **130,** capteur inductif **130,** capteur résistif **130,** capteur optique **130** et/ou un détecteur d'alimentation **130,** c'est le contact avec ladite au moins une station de chargement **350** qui indique que ladite montre **200** est sur ladite au moins une station de chargement **350** est donc dans ladite deuxième orientation **132** : ladite première orientation **131** étant déduite de ladite deuxième orientation **132.**

Ladite au moins une unité permutation **150,** quant à elle, reçoit l'information dudit au moins un organe de détection **130** qu'un changement d'orientation s'est opéré et permute **550** entre ledit au moins un premier mode de fonctionnement **101** et ledit au moins un deuxième mode de fonctionnement **102.** Ladite au moins une unité permutation **150** calcule alors l'angle entre ladite première orientation **131** et ladite deuxième orientation **132** et déplace ledit au moins un premier indicateur **110** et/ou ledit au moins un deuxième indicateur **120** entre ladite au moins une première position primaire **111** et au moins une deuxième position primaire **112** en fonction dudit angle et/ou entre ladite au moins une première position secondaire **121** et au moins une deuxième position secondaire **122** respectivement en fonction dudit angle. Par exemple, s'il est « 10h10 », ledit au moins un premier indicateur **110** indique l'index « 10 » approximativement dans ladite au moins une première position primaire **111** et/ou ledit au moins un deuxième indicateur **120** indique l'index « 2 » dans ladite au moins une première position secondaire **121.** Si ledit angle est de 90° dans le sens horaire, ladite au moins une unité permutation **150** ordonnera audit au moins un organe d'entrainement **160,** typiquement un moteur, de déplacer ledit au moins un premier indicateur **110** et/ou ledit au moins un deuxième indicateur **120** de sorte que l'angle entre ladite au moins une première position primaire **111** et ladite au moins une deuxième position primaire **112** soit de 90°. Il en va de même pour ledit au moins un deuxième indicateur **120,** dont l'angle entre ladite au moins une première position secondaire **121** et ladite au moins une deuxième position secondaire **122** soit de 90°. Ainsi ledit au moins un premier indicateur **110** indique l'index « 1 » approximativement dans ladite au moins une deuxième position primaire **112** et/ou ledit au moins un deuxième indicateur **120** indique l'index « 5 » dans ladite au moins une deuxième position secondaire **122.**

Ledit au moins un affichage numérique **140** permute **550** également entre au moins un premier mode d'affichage **141** dans ladite première orientation **131** et au moins un deuxième mode d'affichage **142** dans ladite deuxième orientation **132.**

Si dans ledit au moins un premier mode d'affichage **141** dans ladite première orientation **131,** ledit au moins un affichage numérique **140** affiche la température et/ou la date par exemple, dans ledit au moins un deuxième mode d'affichage **142** dans ladite deuxième orientation **132,** ledit au moins un affichage numérique **140** affiche un ensemble d'index **145** comme par exemple « 2 » « 3 » et/ou « 4 », afin que lorsque ledit dispositif d'affichage **100** change d'orientation, en particulier lorsque ledit dispositif d'affichage **100** est placé sur une station de chargement, l'utilisateur peut connaître l'orientation de ladite montre et donc lire l'heure aisément pendant le chargement.

Il convient de préciser que l'angle entre ladite au moins une première position primaire **111** et ladite au moins une deuxième position primaire **112** et entre ladite au moins une première position secondaire **121** et ladite au moins une deuxième position secondaire **122** peut être un multiple de 90° même si ledit angle entre ladite première orientation **131** et ladite deuxième orientation **132** n'est que de 50° par exemple. En effet, une limite peut être instaurée afin d'indiquer à ladite au moins une unité permutation **150** à partir de quel angle la permutation **550** doit être effectuée.

## Revendications

1. Dispositif d'affichage (100) comprenant au moins un premier mode de fonctionnement (101), au moins un deuxième mode de fonctionnement (102), et au moins :
- Un premier indicateur (110) ; ledit au moins un premier indicateur (110) étant configuré pour indiquer l'heure dans au moins une première position primaire (111) selon ledit au moins un premier mode de fonctionnement (101) et dans au moins une deuxième position primaire (112) selon ledit au moins un deuxième mode de fonctionnement (102) ;
- Un organe de détection (130) ; ledit au moins un organe de détection (130) étant configuré pour détecter (530) le passage entre une première orientation (131) dudit dispositif d'affichage (100) et une deuxième orientation (132) dudit dispositif d'affichage (100) ;
- Une unité de permutation (150) ; ladite au moins une unité permutation (150) étant configurée pour permuter (550) ledit au moins un premier indicateur (110) entre ladite au moins une première position (111) et ladite au moins une deuxième position (112), lorsque ledit au moins un organe de détection (130) détecte (530) le passage entre ladite première orientation (131) et ladite deuxième orientation (132).

2. Dispositif d'affichage (100) selon la revendication 1, lequel comprend au moins un affichage numérique (140) comprenant au moins un premier mode d'affichage (141) dans ladite première orientation (131) et au moins un deuxième mode d'affichage (142) dans ladite deuxième orientation (132) et ladite au moins une unité permutation (150) étant configurée pour permuter (550) ledit au moins un affichage numérique (140) entre ledit au moins un premier mode d'affichage (141) et ledit au moins un deuxième mode d'affichage (142), lorsque ledit au moins un organe de détection (130) détecte (530) le passage entre ladite première orientation (131) et ladite deuxième orientation (132).

3. Dispositif d'affichage (100) selon la revendication 2, ledit au moins un affichage numérique (140) est configuré pour afficher un ensemble d'index (145) dans ledit au moins un deuxième mode d'affichage (142) dans ladite deuxième orientation (132).

4. Dispositif d'affichage (100) selon l'une quelconque des revendications précédentes, dans lequel dans lequel ledit au moins un premier indicateur (110) est configuré pour comprend au moins un deuxième indicateur (120) configuré pour indiquer les minutes.

5. Dispositif d'affichage (100) selon l'une quelconque des revendications précédentes, dans lequel ledit au moins un organe de détection (130) est un accéléromètre (130), capteur capacitif (130), capteur inductif (130), capteur résistif (130), capteur optique (130) et/ou un détecteur d'alimentation (130).

6. Dispositif d'affichage (100) selon l'une quelconque des revendications précédentes, dans lequel ledit au moins un affichage numérique (140) est un écran LCD, OLED, LED et/ou TFT (140).

7. Dispositif d'affichage (100) selon l'une quelconque des revendications précédentes, lequel comprend au moins un deuxième indicateur (120) configuré pour indiquer les minutes dans au moins une première position secondaire (121) selon ledit au moins un premier mode de fonctionnement (101) et dans au moins une deuxième position secondaire (122) selon ledit au moins un deuxième mode de fonctionnement (102).

8. Dispositif d'affichage (100) selon l'une quelconque des revendications précédentes, lequel comprend au moins un organe d'entrainement (160) configuré pour déplacer ledit au moins un premier indicateur (110) et/ou ledit au moins un deuxième indicateur (120).

9. Dispositif d'affichage (100) selon l'une quelconque des revendications précédentes, dans lequel ladite au moins une unité permutation (150) est configurée pour calculer l'angle entre ladite première orientation (131) et ladite deuxième orientation (132) et pour déplacer ledit au moins un premier indicateur (110) entre ladite au moins une première position primaire (111) et ladite au moins une deuxième position primaire (112) en fonction dudit angle et/ou pour déplacer ledit au moins un deuxième indicateur (120) entre ladite au moins une première position secondaire (121) et ladite au moins une deuxième position secondaire (122) en fonction dudit angle.

10. Montre (200) de préférence connectée configurée pour fonctionner selon au moins un premier mode de fonctionnement (101) et au moins un deuxième mode de fonctionnement (102) et comprenant au moins un dispositif d'affichage (100) selon l'une quelconque des revendications 1 à 9.

11. Kit de chargement (300) comprenant au moins une montre (200) selon la revendication 10 et au moins une station de chargement (350) configuré pour charger ou recharger ladite au moins une montre (200).

12. Procédé de permutation d'affichage (500) mis en œuvre par ledit dispositif d'affichage (100) selon l'un des revendications 1 à 9, par ladite montre (200) selon la revendication 10 et/ou par le kit de chargement (300) selon la revendication 11 ; ledit procédé de permutation d'affichage (500) comprenant :
- Une détection (530) du passage entre ladite première orientation (131) dudit dispositif d'affichage (100) et ladite deuxième orientation (132) dudit dispositif d'affichage (100) ;
- Une permutation (550) dudit au moins un premier indicateur (110) entre ledit au moins un premier mode de fonctionnement (101) et ledit au moins un deuxième mode de fonctionnement (102), et ledit au moins un affichage numérique (140) entre ledit au moins un premier mode d'affichage (141) et ledit au moins un deuxième mode d'affichage (142).

13. Procédé de permutation d'affichage (500) selon la revendication 12, dans lequel ladite permutation permute ledit au moins un affichage numérique (140) entre ledit au moins un premier mode d'affichage (141) et ledit au moins un deuxième mode d'affichage (142).

14. Procédé de permutation d'affichage (500) selon la revendication 12 ou 13, lequel comprend une indication de l'heure (510) dans ledit au moins un premier mode de fonctionnement (101) et dans ledit au moins un deuxième mode de fonctionnement (102).
